# EUROPEAN PATENT SPECIFICATION

(11) **EP 3 979 203 B1**
(45) Date of publication and mention of the grant of the patent: **30.07.2025**
(21) Application number: 20837152.6
(22) Date of filing: 22.06.2020
(51) Int. Cl.: G01S 7/48, G01S 17/89, G06T 5/70, G06V 10/44, G06T 5/20

(54) **DEPTH MAP PROCESSING METHOD AND APPARATUS, ELECTRONIC DEVICE AND READABLE STORAGE MEDIUM**
TIEFENKARTENVERARBEITUNGSFAHREN UND -VORRICHTUNG, ELEKTRONISCHE VORRICHTUNG UND LESBARES SPEICHERMEDIUM
PROCÉDÉ ET APPAREIL DE TRAITEMENT DE CARTE DE PROFONDEUR, DISPOSITIF ÉLECTRONIQUE ET SUPPORT DE STOCKAGE LISIBLE

(30) Priority: 11.07.2019 CN 201910626053
(43) Date of publication of application: 06.04.2022
(73) Proprietor: GUANGDONG OPPO MOBILE TELECOMMUNICATIONS CORP., LTD., Wusha, Chang'an Dongguan Guangdong 523860 (CN)
(72) Inventor: KANG, Jian, Dongguan, Guangdong 523860 (CN)
(74) Representative: Manitz Finsterwald Patent- und Rechtsanwaltspartnerschaft mbB
(86) International application number: PCT/CN2020/097515
(87) International publication number: WO 2021/004263

(56) References cited:
- EP-A1- 2 538 242
- WO-A1-2013/079602
- CN-A- 102 184 531
- CN-A- 108 961 294
- CN-A- 109 685 748
- CN-A- 110 400 343
- US-A1- 2017 302 910

## Description

### TECHNICAL FIELD

The present application relates to the technical field of image processing technologies, and in particular, to a depth map processing method, a depth map processing apparatus, an electronic device, and a readable storage medium.

### BACKGROUND

Generally, when measuring a depth of an object based on a time of flight (ToF) sensor, the ToF sensor determines a distance between the sensor and the object by calculating flight time of a pulse signal. However, since various types of uncertainty exist in the measurement process, a variety of errors are brought. For example, in a region where the depth is not continuous, such as an edge of the object to be measured, the sensor receives pulse signals from a foreground and a background at the same time, which results in that a depth value of the edge of the object is between the foreground and the background. When a distance between the foreground and the background is large, it will be caused that a depth error in this part of region is large, and we call pixels in this part of region as flying pixels.

In the prior art, flying pixel removal filtering includes setting flying pixel removal thresholds corresponding to different photographing modes, determining a flying pixel removal threshold based on a current photographing mode, and screening flying pixels in a current photographed image to remove.

EP253842A1discloses a method for correcting defective depth values in depth map images. Defective values correspond to "noisy pixels" located on continuous flat surfaces and interpolated "flying pixels" located along an edge between a foreground object and a background object. The method comprising the steps of accessing a depth map of a scene which includes the foreground and background objects, detecting and identifying noisy and interpolated depth measurements within the depth map using a method based on directional derivatives, and defining and applying a correction to each of the detected defective noisy and interpolated depth measurements using a specifically defined weighted correction factor. By providing the corrected defective depth values in depth map images, edges are sharpened in depth and continuous surfaces are flattened, enabling higher efficiency and robustness of further image processing.

CN108961294A teaches a method and device for detecting flying pixels of a three-dimensional point cloud. On the basis of the gradients of points in a point cloud in a row direction and a column direction, a flying pixel is deleted from the point cloud, wherein the flying pixel is a pixel with the gradient in the row direction and the gradient in the column direction larger than a preset gradient threshold.

WO2013079602A1 teaches a filter structure for filtering a disparity map comprising a first filter (for example a median filter), a second filter (for example an average filter) and a filter selector. The filter selector is provided for selecting the first filter or the second filter for filtering a certain section of the disparity map, the selection being based on at least one local property of the section, for example a detection of a depth discontinuity.

### SUMMARY OF THE DISCLOSURE

A depth map processing method, a depth map processing apparatus, an electronic device, and a computer-readable storage medium are provided as set out in the appended set of claims.

### BRIEF DESCRIPTION OF THE DRAWINGS

The above and/or additional aspects and advantages of the present application will become obvious and easy to understood from the following description of embodiments in accompany with drawings.
FIG. 1 is a schematic flow chart of a depth map processing method based on ToF provided by an embodiment of the present application.
FIG. 2 is a schematic flow chart of a method for calculating an original depth value according to an embodiment of the present application.
FIG. 3 is a schematic flow chart of a method for removing a flying pixel according to an embodiment of the present application.
FIG. 4 is a flow chart of a depth map processing method according to an embodiment of the present application.
FIG. 5 is a schematic view of an applied scene of a depth map processing method according to an embodiment of the present application.
FIG. 6 is a structural schematic diagram of a depth map processing apparatus according to a first embodiment of the present application.
FIG. 7 is a structural schematic diagram of a depth map processing apparatus according to a second embodiment of the present application.
FIG. 8 is a structural schematic diagram of a depth map processing apparatus according to a third embodiment of the present application.

### DETAILED DESCRIPTION

Embodiments of the present application are described in detail below. Examples of the embodiments are shown in the accompanying drawings, wherein the same or similar reference numerals always indicate the same or similar elements or elements with the same or similar functions. The embodiments described below with reference to the drawings are exemplary, and are intended to illustrate the present application, but should not be understood as any limitation to the present application.

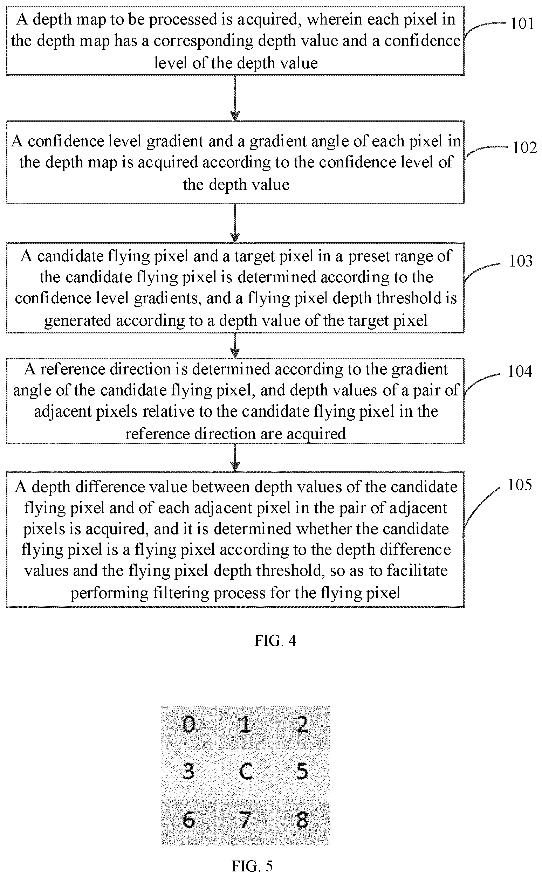

Referring to FIG. 4, a depth map processing method of an embodiment of the present application comprises the following operations: acquiring a depth map to be processed, wherein each pixel in the depth map has a corresponding depth value and a confidence level of the depth value; acquiring a confidence level gradient and a gradient angle of each pixel in the depth map according to the confidence level of the depth value; determining a candidate flying pixel and a target pixel according to the confidence level gradients, and generating a flying pixel depth threshold according to a depth value of the target pixel, wherein the target pixel is a pixel point being distanced from the candidate flying pixel within a preset range; determining a reference direction according to the gradient angle of the candidate flying pixel, and acquiring depth values of a pair of adjacent pixels relative to the candidate flying pixel in the reference direction; acquiring a depth difference value between depth values of the candidate flying pixel and of each adjacent pixel in the pair of adjacent pixels, and determining whether the candidate flying pixel is a flying pixel according to the depth difference values and the flying pixel depth threshold, so as to facilitate performing filtering process for the flying pixel.

According to the invention, the determining a candidate flying pixel and a target pixel according to the confidence level gradients comprises: determining a pixel of which the confidence level gradient is greater than a preset threshold as the candidate flying pixel; determining all pixels located in a preset range distanced from the candidate flying pixel as candidate reference pixels, and acquiring a confidence level of a depth value of each candidate reference pixel in all of the candidate reference pixels; and determining a candidate reference pixel of which the confidence level of a depth value is greater than a preset threshold as a target pixel.

In some embodiments, the determining a reference direction according to the gradient angle of the candidate flying pixel comprises: determining whether the gradient angle of the candidate flying pixel belongs to a preset range; if it belongs to the preset range, determining that the reference direction is an up-down direction or a left-right direction of the candidate flying pixel; if it does not belong to the preset range, determining that the reference direction includes any opposite directions being adjacent to two sides of the candidate flying pixel.

In some embodiments, the generating a flying pixel depth threshold according to a depth value of the target pixel comprises: acquiring a base depth value of the target pixel; and acquiring a flying pixel depth threshold according to a product of the base depth value and a preset depth standard error.

In some embodiments, the determining whether the candidate flying pixel is a flying pixel according to the depth difference values and the flying pixel depth threshold comprises: determining whether each of all of the depth values is greater than the flying pixel depth threshold; if each of all of the depth values is greater than the flying pixel depth threshold, determining that the candidate flying pixel is a flying pixel.

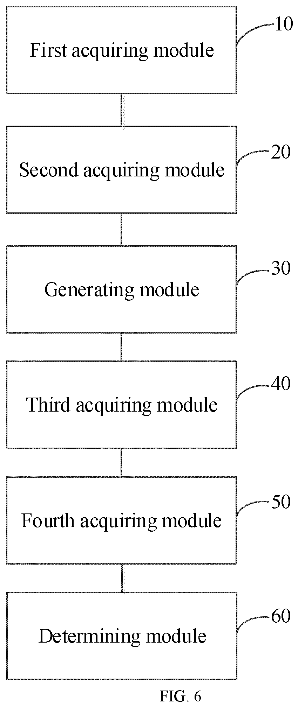

Referring to FIG. 4 and FIG. 6, a depth map processing apparatus of an embodiment of the present application comprises a first acquiring module 10, a second acquiring module 20, a generating module 30, a third acquiring module 40, a fourth acquiring module 50, and a determining module 60. The first acquiring module 10 is configured to acquire a depth map to be processed, wherein each pixel in the depth map has a corresponding depth value and a confidence level of the depth value. The second acquiring module 20 is configured to acquire a confidence level gradient and a gradient angle of each pixel in the depth map according to the confidence level of the depth value. The generating module 30 is configured to determine a candidate flying pixel and a target pixel according to the confidence level gradients, and generate a flying pixel depth threshold according to a depth value of the target pixel, wherein the target pixel is a pixel point being distanced from the candidate flying pixel within a preset range. The third acquiring module 40 is configured to determine a reference direction according to the gradient angle of the candidate flying pixel, and acquire depth values of a pair of adjacent pixels relative to the candidate flying pixel in the reference direction. The fourth acquiring module 50 is configured to acquire a depth difference value between depth values of the candidate flying pixel and of each adjacent pixel in the pair of adjacent pixels. The determining module 60 is configured to determine whether the candidate flying pixel is a flying pixel according to the depth difference values and the flying pixel depth threshold, so as to facilitate performing filtering process for the flying pixel.

Referring to FIG. 6, in some embodiments, the generating module 30 is further configured to: determine a pixel of which the confidence level gradient is greater than a preset threshold as the candidate flying pixel; determine all pixels located in a preset range distanced from the candidate flying pixel as candidate reference pixels, and acquire a confidence level of a depth value of each candidate reference pixel in all of the candidate reference pixels; and determine a candidate reference pixel of which the confidence level of a depth value is greater than a preset threshold as a target pixel.

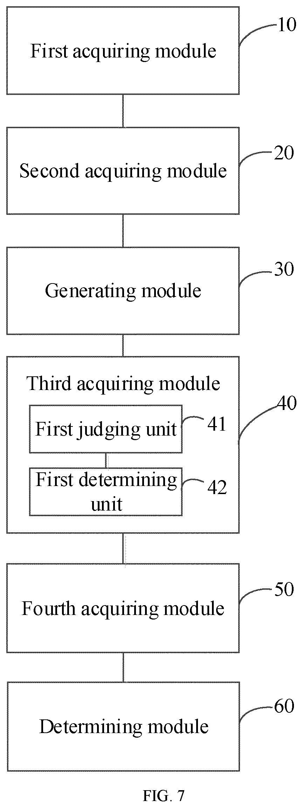

Referring to FIG. 7, in some embodiments, the third acquiring module 40 includes a first judging unit 41 and a first determining unit 42. The first judging module 41 is configured to determine whether the gradient angle of the candidate flying pixel belongs to a preset range; and the first determining unit 42 is configured to: if it belongs to the preset range, determine that the reference direction is an up-down direction or a left-right direction of the candidate flying pixel; the first determining unit 42 is further configured to: if it does not belong to the preset range, determine that the reference direction includes any opposite directions being adjacent to two sides of the candidate flying pixel.

Referring to FIG. 6, in some embodiments, the generating module 30 is further configured to: acquire a base depth value of the target pixel; and acquire a flying pixel depth threshold according to a product of the base depth value and a preset depth standard error.

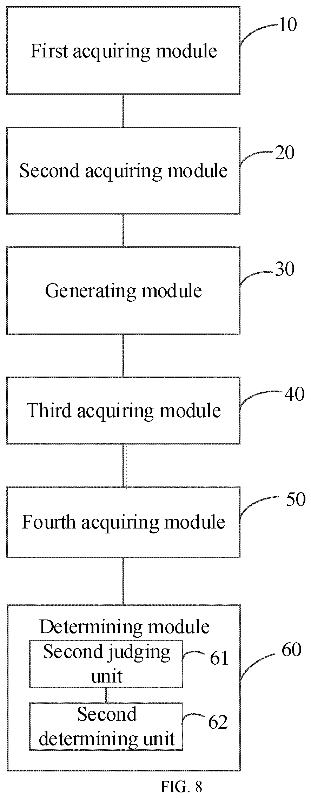

Referring to FIG. 8, in some embodiments, the determining module 60 comprises a second judging unit 61 and a second determining unit 62. The second judging unit 61 is configured to determine whether each of all of the depth values is greater than the flying pixel depth threshold; and the second determining unit 62 is configured to: if each of all of the depth values is greater than the flying pixel depth threshold, determine that the candidate flying pixel is a flying pixel.

Referring to FIG. 4, an electronic device of an embodiment of the present application comprises a memory, a processor, and a computer program stored in the memory and being executable by the processor; the processor, when executing the computer program, implements a depth map processing method, wherein the depth map processing method comprises: acquiring a depth map to be processed, wherein each pixel in the depth map has a corresponding depth value and a confidence level of the depth value; acquiring a confidence level gradient and a gradient angle of each pixel in the depth map according to the confidence level of the depth value; determining a candidate flying pixel and a target pixel according to the confidence level gradients, and generating a flying pixel depth threshold according to a depth value of the target pixel, wherein the target pixel is a pixel point being distanced from the candidate flying pixel within a preset range; determining a reference direction according to the gradient angle of the candidate flying pixel, and acquiring depth values of a pair of adjacent pixels relative to the candidate flying pixel in the reference direction; acquiring a depth difference value between depth values of the candidate flying pixel and of each adjacent pixel in the pair of adjacent pixels, and determining whether the candidate flying pixel is a flying pixel according to the depth difference values and the flying pixel depth threshold, so as to facilitate performing filtering process for the flying pixel.

In some embodiments, the determining a candidate flying pixel and a target pixel according to the confidence level gradients comprises: determining a pixel of which the confidence level gradient is greater than a preset threshold as the candidate flying pixel; determining all pixel located in a preset range distanced from the candidate flying pixels as candidate reference pixels, and acquiring a confidence level of a depth value of each candidate reference pixel in all of the candidate reference pixels; and determining a candidate reference pixel of which the confidence level of a depth value is greater than a preset threshold as a target pixel.

In some embodiments, the determining a reference direction according to the gradient angle of the candidate flying pixel comprises: determining whether the gradient angle of the candidate flying pixel belongs to a preset range; if it belongs to the preset range, determining that the reference direction is an up-down direction or a left-right direction of the candidate flying pixel; if it does not belong to the preset range, determining that the reference direction includes any opposite directions being adjacent to two sides of the candidate flying pixel.

In some embodiments, the generating a flying pixel depth threshold according to a depth value of the target pixel comprises: acquiring a base depth value of the target pixel; and acquiring a flying pixel depth threshold according to a product of the base depth value and a preset depth standard error.

In some embodiments, the determining whether the candidate flying pixel is a flying pixel according to the depth difference values and the flying pixel depth threshold comprises: determining whether each of all of the depth values is greater than the flying pixel depth threshold; if each of all of the depth values is greater than the flying pixel depth threshold, determining that the candidate flying pixel is a flying pixel.

Referring to FIG. 4, a non-transitory computer-readable storage medium of an embodiment of the present application stores a computer program, and the computer program, when being executed by a processor, implements a depth map processing method, wherein the depth map processing method comprises: acquiring a depth map to be processed, wherein each pixel in the depth map has a corresponding depth value and a confidence level of the depth value; acquiring a confidence level gradient and a gradient angle of each pixel in the depth map according to the confidence level of the depth value; determining a candidate flying pixel and a target pixel according to the confidence level gradients, and generating a flying pixel depth threshold according to a depth value of the target pixel, wherein the target pixel is a pixel point being distanced from the candidate flying pixel within a preset range; determining a reference direction according to the gradient angle of the candidate flying pixel, and acquiring depth values of a pair of adjacent pixels relative to the candidate flying pixel in the reference direction; acquiring a depth difference value between depth values of the candidate flying pixel and of each adjacent pixel in the pair of adjacent pixels, and determining whether the candidate flying pixel is a flying pixel according to the depth difference values and the flying pixel depth threshold, so as to facilitate performing filtering process for the flying pixel.

**In** some embodiments, the determining a candidate flying pixel and a target pixel according to the confidence level gradients comprises: determining a pixel of which the confidence level gradient is greater than a preset threshold as the candidate flying pixel; determining all reference pixels located in a preset range distanced from the candidate flying pixel as candidate reference pixels, and acquiring a confidence level of a depth value of each candidate reference pixel in all of the candidate reference pixels; and determining a candidate reference pixel of which the confidence level of a depth value is greater than a preset threshold as a target pixel.

In some embodiments, the determining a reference direction according to the gradient angle of the candidate flying pixel comprises: determining whether the gradient angle of the candidate flying pixel belongs to a preset range; if it belongs to the preset range, determining that the reference direction is an up-down direction or a left-right direction of the candidate flying pixel; if it does not belong to the preset range, determining that the reference direction includes any opposite directions being adjacent to two sides of the candidate flying pixel.

In some embodiments, the generating a flying pixel depth threshold according to a depth value of the target pixel comprises: acquiring a base depth value of the target pixel; and acquiring a flying pixel depth threshold according to a product of the base depth value and a preset depth standard error.

In some embodiments, the determining whether the candidate flying pixel is a flying pixel according to the depth difference values and the flying pixel depth threshold comprises: determining whether each of all of the depth values is greater than the flying pixel depth threshold; if each of all of the depth values is greater than the flying pixel depth threshold, determining that the candidate flying pixel is a flying pixel.

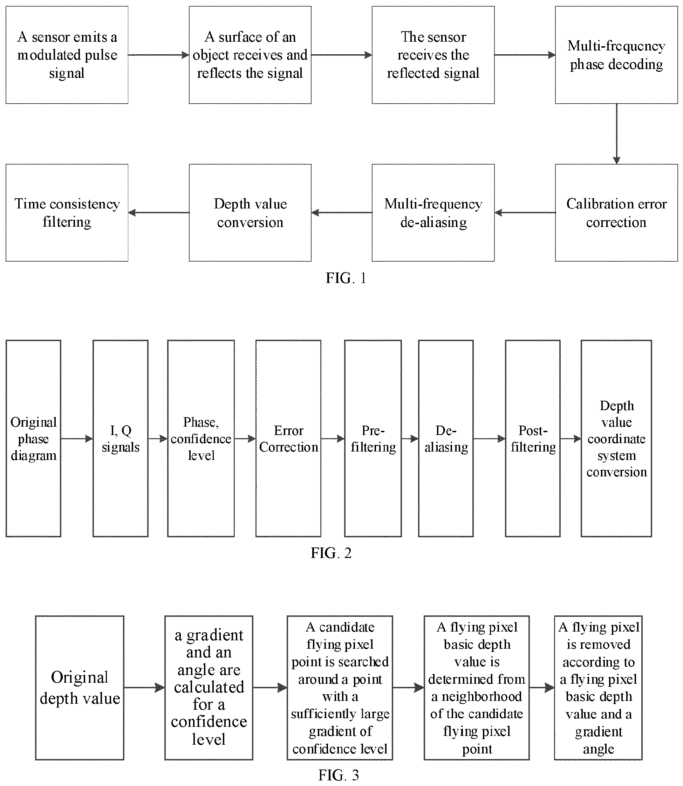

In order to enable those skilled in the art to understand the timing of the depth map removal method of the present application more clearly, the entire process of ToF depth map processing will be described below in combination with FIG. 1. As shown in FIG. 1, a ToF sensor emits a modulated pulse signal, a surface of an object to be measured receives the pulse signal and reflects the signal, then the ToF sensor receives the reflected signal; a multi-frequency phase diagram is decoded, and error correction is performed for ToF data according to calibration parameters, then the multi-frequency signal is de-aliased, a depth value is converted from a radial coordinate system to a Cartesian coordinate system, and finally flying pixel removal filtering is performed for the depth map.

However, in fact, the environment and other parameters of each photographing are variable, resulting in differences in acquired depth values. Removal of flying pixels based on a preset and fixed flying pixel removal threshold may result in insufficient removal or false removal of flying pixels.

Among them, performing flying pixel removal filtering for a depth map includes two main parts: a ToF original depth value calculation stage and a self-adaptive flying pixel removal filtering stage. Among them, as shown in FIG. 2, the ToF original depth value calculation stage includes: based on an acquired original phase diagram collected by a ToF sensor (which is a four-phase diagram in a single-frequency mode and an eight-phase diagram in a dual-frequency mode, assuming the mode is the dual-frequency mode in this embodiment), calculating an IQ signal of each pixel; then calculating a phase and a confidence level of each pixel according to the IQ signal, wherein the confidence level represents a credibility of the phase value of this point, and is a response to an energy size of this point; according to internal parameters of ToF offline calibration, correcting several errors including cycle errors, temperature errors, gradient errors, parallax errors, and the like on line; performing pre-filtering before dual-frequency de-aliasing to filter noise in each frequency mode respectively; after removing the dual-frequency noise, aliasing the dual-frequency to determine the actual number of cycles of each pixel; according to the actual number of cycles, performing post-filtering for the aliased result; and then converting a radial coordinate system after post-filtering into a Cartesian coordinate system, so as to perform a next step of processing.

In the flying pixel filtering stage, as shown in FIG. 3, in an embodiment of the present application, after obtaining an original depth map in a Cartesian coordinate system, a confidence level gradient and a gradient angle are calculated for a depth confidence level in the depth map; thus, since flying pixels usually occur in areas with discontinuous depths, that is, the confidence level gradient is high, a candidate flying pixel is searched around a point with a sufficiently large confidence level gradient (it should be noted that the term "candidate flying pixel" mentioned throughout the present application means a pixel that may be and also may not be determined as a real flying pixel according to the specific method embodiments provided by the present application), and a depth value of a pixel point with a relatively high confidence level, which is the closest to the candidate flying pixel in a certain neighborhood of the candidate flying pixel, is used as a flying pixel basic depth value of the candidate point. Among them, if there is no flying pixel in the certain neighborhood, a depth value of the candidate point is used as the flying pixel basic depth value, a flying pixel threshold is calculated self-adaptively according to the flying pixel basic depth value and a theoretical depth error, and flying pixel filtering is performed based on the flying pixel threshold. Therefore, based on a reliable depth value in a certain neighborhood used as the flying pixel basic depth value of the candidate point, flying pixels are effectively removed; and because the flying pixel depth threshold is determined self-adaptively based on the flying pixel basic depth value, misjudgment of flying pixels is reduced to a certain extent.

The depth map processing method in the present application mainly aims at the flying pixel removal method indicated in the above FIG. 3 to illustrate. FIG. 4 is a flow chart of a depth map processing method according to an embodiment of the present application, as shown in FIG. 4, the depth map processing method comprises the following.

Operation 101, a depth map to be processed is acquired, wherein each pixel in the depth map has a corresponding depth value and a confidence level of the depth value.

It can be understood that the depth map to be processed is a depth map in a Cartesian coordinate system, and each pixel in the depth map has a corresponding depth value and a confidence level of the depth value; wherein the higher energy of the depth value, the higher the corresponding confidence level. Among them, the depth map to be processed can be a historically acquired depth map, and can also be a depth map currently acquired in real time.

Operation 102, a confidence level gradient and a gradient angle of each pixel in the depth map is acquired according to the confidence level of the depth value.

Among them, the confidence level gradient means a difference of a confidence level of which a depth value changes, and the gradient angle means a direction of the change of the depth value. For example, regarding a pixel A, if a depth difference between it and an adjacent pixel in a horizontal direction is greater than a standard depth difference, it is determined that a gradient angle of the pixel A is an angle corresponding to the horizontal direction.

Operation 103, a candidate flying pixel and a target pixel is determined according to the confidence level gradients, and a flying pixel depth threshold is generated according to a depth value of the target pixel, wherein the target pixel is a pixel point being distanced from the candidate flying pixel within a preset range.

Among them, it should be noted that the term "candidate flying pixel" mentioned throughout the present application means a candidate pixel that may be and also may not be determined as a real flying pixel according to the specific method embodiments provided by the present application, and the operation "determining whether a candidate flying pixel is a flying pixel" and the like throughout the present application means determining whether a candidate flying pixel is a real flying pixel.

Specifically, because flying pixels usually occur in areas with discontinuous depths, and a degree of continuity of depth can be determined based on a confidence level gradient, in a discontinuous area, the confidence level gradient may change greatly. For example, in an edge area of an object where flying pixels concentrate, differences among confidence levels of pixels are large, and a gradient of confidence is obviously large. Therefore, in this embodiment, candidate flying pixels are searched around a point of which a confidence level gradient is sufficiently large, that is, according to the confidence level of each pixel in the depth map, the confidence level gradient of each pixel in the depth map is obtained, and then a pixel of which the confidence level gradient is greater than a preset threshold is determined as a candidate flying pixel. For example, regarding a pixel 1, confidence levels of surrounding adjacent pixels are calculated; based on differences between the confidence level of the pixel 1 and the confidence levels of the surrounding pixels, a confidence level gradient is determined based on the differences; wherein the largest difference can be used as the confidence level gradient of the pixel 1, or a difference between the confidence level of the pixel 1 and an adjacent pixel point in a direction away from a contour of the object can be taken as the confidence level gradient.

It should be understood that depth values of candidate flying pixels are relatively distorted. Therefore, after selecting a pixel with a confidence level gradient being greater than a preset threshold as a candidate flying pixel, we determine all candidate reference pixels within a preset range of candidate flying pixels, acquire a confidence level of a depth value of each candidate pixel in all candidate reference pixels, and determine a candidate pixel of which a confidence level of a depth value is greater than a preset threshold as the target pixel. Among them, the preset range is determined based on acquisition accuracy of depth values; the higher the acquisition accuracy, the larger the corresponding preset range; otherwise, the smaller the corresponding preset range. In this embodiment, when there are a plurality of candidate reference pixels of which depth values are greater than the preset threshold, the plurality of candidate reference pixels are all used as target pixels, so as to determine an average value based on the depth values of the plurality of target pixel as determination of a depth threshold of subsequent flying pixels; when there is no target pixel, a candidate reference pixel with the greatest confidence level of depth value can be determined as the target pixel.

Therefore, in this embodiment of the present application, the target pixel is determined around a candidate flying pixel based on the confidence level. On one hand, the target pixel is located in the neighborhood of the candidate flying pixel, and its depth value is relatively similar to a depth value of the candidate flying pixel. On the other hand, because the confidence level of the depth value of the target pixel is relatively high, the depth value more truly reflects a true depth value that should exist near this position, so as to ensure that the flying pixel depth threshold determined based on the target pixel reflects a true depth value situation of the current depth map, which helps accurately position flying pixels.

It can be seen from the above analysis that, in this embodiment of the present application, when there are a plurality of candidate reference pixels of which depth values are greater than the preset threshold, the flying pixel depth threshold can be based on the average value of the plurality of candidate reference pixels; of course, the target pixel can also be based on the candidate reference pixel with the largest depth value in the plurality of candidate reference pixels, and the flying pixel depth threshold is generated based on the depth value of the target pixel. When there is no candidate reference pixel with a depth value greater than the preset threshold, it is possible to determine the target pixel based on a depth value of a candidate reference pixel with the greatest confidence level, and determine the flying pixel depth threshold based on the depth value of the target pixel.

Further, after obtaining the depth value of the target pixel, the depth value is used as a basic depth value, and the flying pixel depth threshold can be obtained according to a product of the basic depth value and a preset depth standard error. Among them, the preset depth standard error identifies a normal deviation range of the depth value between pixels caused by loop errors, temperature errors, and other reasons when acquiring the depth map. The flying pixel depth threshold determined based on the product of the normal deviation range and the basic depth value is more coincident with the depth value of the current depth map, which facilitates determination efficiency of flying pixels. For example, if the depth standard error is 1% and the basic depth value of a target non-flying pixel is *d_{base},* it is possible to use *d_{fly} = d_{base}* *1% as the flying pixel depth threshold.

Operation 104, a reference direction is determined according to the gradient angle of the candidate flying pixel, and depth values of a pair of adjacent pixels relative to the candidate flying pixel in the reference direction are acquired.

Specifically, as analyzed above, a depth change direction of the candidate flying pixel can be determined based on the gradient angle of the candidate flying pixel. Differences between depth values of pixels in the depth change direction and of the candidate flying pixel are obviously used as a standard for determining whether the candidate flying pixel is a flying pixel, and directions other than the gradient angle can be ignored. Thus, efficiency of determining flying pixels is improved. Specifically, the reference direction is determined according to the gradient angle of the candidate flying pixel, and depth values of a pair of adjacent pixels relative to the candidate flying pixel in the reference direction are acquired.

As a possible example, it is determined whether the gradient angle of the candidate flying pixel belongs to a preset range, and the first preset range is used to determine whether the candidate flying pixel has a depth change in a horizontal or vertical direction. For example, the preset range can be a range other than [-35°,-55°] or [35°,55°]. If it is within this range, referring to FIG. 5, it is obvious that the depth change direction does not include a diagonal direction. Therefore, the determined reference direction is an up-down direction or a left-right direction of the candidate flying pixel; if it does not belong to the preset range, it is determined that the reference direction includes any opposite directions being adjacent to two sides of the candidate flying pixel.

Operation 105, a depth difference value between depth values of the candidate flying pixel and of each adjacent pixel in the pair of adjacent pixels is acquired, and it is determined whether the candidate flying pixel is a flying pixel according to the depth difference values and the flying pixel depth threshold, so as to facilitate performing filtering process for the flying pixel.

Specifically, as analyzed above, flying pixels are greatly affected by pulse signals in the foreground area and the background area, which result in that regarding the depth value between the foreground and the background, the deviation of the depth value is large, and thus it necessarily has a large deviation from depth values of surrounding pixels. In this embodiment, a depth difference value between depth values of the candidate flying pixel and of each adjacent pixel in the pair of adjacent pixels is acquired, so as to determine a flying pixel according to difference of between depth values of the candidate flying pixel and of the adjacent pixels in the reference direction. If change relative to the depth values of the adjacent pixels in the reference direction is greater than the flying pixel depth threshold, the candidate flying pixel is considered as being a flying pixel. Thus, the flying pixel is filtered to obtain a depth map in which flying pixels are filtered off, and experience of gesture recognition, three-dimensional modeling, somatosensory games and other applications based on the depth map is improved.

Of course, in an embodiment of the present application, after a flying pixel is determined, it is also possible to compensate a depth value of the flying pixel, so that it is compensated to be a normal depth value, for example, its depth value is compensated to be a depth value of which a difference from a depth value of an adjacent pixel point is smaller than the flying pixel depth threshold, etc.

It needs to be noted that in different application scenes, methods of determining whether a candidate flying pixel is a flying pixel according to all depth differences and the flying pixel depth threshold are different. Examples are as follows.

### Example I

In this embodiment, it is determined whether each of all depth differences is greater than the flying pixel depth threshold; if each of all depth differences is greater than the flying pixel depth threshold, it is determined that a candidate flying pixel is a flying pixel.

For example, continuing to refer to FIG. 5, regarding a candidate flying pixel C, if the preset range is a range outside [-35°,-55°] or [35°,55°], and the gradient angle of the point C is not located in the interval of [-35°,-55°] or [35°,55°], thus when both abs (depth of point C-depth of point 1) and abs (depth of point C-depth of point 7) are greater than *d_{fly},* or when both abs (depth of point C-depth of point 3) and abs (depth of point C-depth of point 5) are greater than *d_{fly},* the point C is considered as being a flyingpixel and removed. If the gradient angle of point C is located in the interval of [-35°, -55°] or [35°,55°], thus when both abs (depth of point C-depth of point 1) and abs (depth of point C-depth of point 7) are greater than *d_{fly},* or when both abs (depth of point C-depth of point 3) and abs (depth of point C-depth of point 5) are greater than *d_{fly},* or when both abs (depth of point C-depth of point 0) and abs (depth of point C-depth of point 8) are greater than *d_{fly},* , or when both abs (depth of point C-depth of point 2) and abs (depth of point C-depth of point 6) are greater than *d_{fly},* the point C is considered as being a flying pixel and removed. Among them, abs is an absolute value of a depth difference, and *d_{fly}* is the aforesaid flying pixel threshold.

### Example II

In this embodiment, a difference between depths of the candidate flying pixel and each pixel in pixels in various directions is calculated, and the number of depth differences being greater than the flying pixel depth threshold is counted; if the number is greater than a preset threshold, it represents that change of the depth value of the candidate flying pixel is large in most directions, and thus it is determined that the candidate flying pixel is a real flying pixel.

Among them, the aforesaid preset threshold is calibrated according to a large amount of experimental data. In a possible example, when the number of neighbors in various directions is 8, the preset threshold may be 6, etc. In another possible example, in addition to the neighboring pixels around the candidate flying pixel, further neighboring pixels of these neighboring pixels are further additionally obtained outside of these neighboring pixels; based on differences between depth values and between confidence levels of each neighboring pixel and its further neighboring pixels, neighboring pixels with higher confidence levels are screened from the neighboring pixels of each candidate flying pixel, and the preset threshold is determined based on the number of screened neighboring pixels.

In conclusion, in the depth map processing method of the embodiment of the present application, based on current situations of depth values of pixels, a flying pixel depth threshold is determined self-adaptively; thus, based on the flying pixel depth threshold, determination of a flying pixel is performed; moreover, when performing determination of the flying pixel, a basis for whether it is a flying pixel is provided from more directions at the same time in combination with a confidence level gradient angle, accuracy of determination for the flying pixel is improved, and filtering quality of a depth map is improved.

In order to implement the aforementioned embodiments, the present application further provides a depth map processing apparatus. FIG. 6 is a structural schematic diagram of a depth map processing apparatus according to an embodiment of the present application. As shown in FIG. 6, the depth map processing apparatus comprises a first acquiring module 10, a second acquiring module 20, a generating module 30, a third acquiring module 40, a fourth acquiring module 50m and a determining module 60.

The first acquiring module 10 is configured to acquire a depth map to be processed, wherein each pixel in the depth map has a corresponding depth value and a confidence level of the depth value.

It can be understood that the depth map to be processed is a depth map in a Cartesian coordinate system, and each pixel in the depth map has a corresponding depth value and a confidence level of the depth value; wherein the higher energy of the depth value, the higher the corresponding confidence level.

The second acquiring module 20 is configured to acquire a confidence level gradient and a gradient angle of each pixel in the depth map according to the confidence level of the depth value.

Among them, the confidence level gradient means a difference of a confidence level of which a depth value changes, and the gradient angle means a direction of the change of the depth value. For example, regarding a pixel A, if a depth difference between it and an adjacent pixel in a horizontal direction is greater than a standard depth difference, it is determined that a gradient angle of the pixel A is an angle corresponding to the horizontal direction.

The generating module 30 is configured to determine a candidate flying pixel and a target pixel according to the confidence level gradients, and generate a flying pixel depth threshold according to a depth value of the target pixel, wherein the target pixel is a pixel point being distanced from a flying pixel within a preset range.

Specifically, because flying pixels usually occur in areas with discontinuous depths, and a degree of continuity of depth can be determined based on a confidence level gradient, in a discontinuous area, the confidence level gradient may change greatly. For example, in an edge area of an object where flying pixels concentrate, differences among confidence levels of pixels are large, and a gradient of confidence is obviously large. Therefore, in this embodiment, candidate flying pixels are searched around a point of which a confidence level gradient is sufficiently large, that is, according to the confidence level of each pixel in the depth map, the second acquiring module 20 obtains the confidence level gradient of each pixel in the depth map, and then the generating module 30 determines a pixel of which the confidence level gradient is greater than a preset threshold as a candidate flying pixel. For example, regarding a pixel 1, confidence levels of surrounding adjacent pixels are calculated; based on differences between the confidence level of the pixel 1 and the confidence levels of the surrounding pixels, a confidence level gradient is determined based on the differences; for example, the largest difference can be used as the confidence level gradient of the pixel 1, or a difference between the confidence level of the pixel 1 and an adjacent pixel point in a direction away from a contour of the object can be taken as the confidence level gradient.

It should be understood that depth values of candidate flying pixels are relatively distorted. Therefore, after selecting a pixel with a confidence level gradient being greater than a preset threshold as a candidate flying pixel, the generating module 30 determines all candidate reference pixels within a preset range of candidate flying pixels, acquires a confidence level of a depth value of each candidate pixel in all candidate reference pixels, and determines a candidate pixel of which a confidence level of a depth value is greater than a preset threshold as the target pixel. Among them, the preset range is determined based on acquisition accuracy of depth values; the higher the acquisition accuracy, the larger the corresponding preset range; otherwise, the smaller the corresponding preset range. In this embodiment, when there are a plurality of candidate reference pixels of which depth values are greater than the preset threshold, the plurality of candidate reference pixels are all used as target pixels, so as to determine an average value based on the depth values of the plurality of target pixel as determination of a depth threshold of subsequent flying pixels; when there is no target pixel, a candidate reference pixel with the greatest confidence level of depth value can be determined as the target pixel.

Therefore, in this embodiment of the present application, the target pixel is determined around a candidate flying pixel based on the confidence level. On one hand, the target pixel is located in the neighborhood of the candidate flying pixel, and its depth value is relatively similar to a depth value of the candidate flying pixel. On the other hand, because the confidence level of the depth value of the target pixel is relatively high, the depth value more truly reflects a true depth value that should exist near this position, so as to ensure that the flying pixel depth threshold determined based on the target pixel reflects a true depth value situation of the current depth map, which helps accurately position flying pixels.

It can be seen from the above analysis that, in this embodiment of the present application, when there are a plurality of candidate reference pixels of which depth values are greater than the preset threshold, the flying pixel depth threshold can be based on the average value of the plurality of candidate reference pixels; of course, the target pixel can also be based on the candidate reference pixel with the largest depth value in the plurality of candidate reference pixels, and the flying pixel depth threshold is generated based on the depth value of the target pixel. When there is no candidate reference pixel with a depth value greater than the preset threshold, it is possible to determine the target pixel based on a depth value of a candidate reference pixel with the greatest confidence level, and determine the flying pixel depth threshold based on the depth value of the target pixel.

Further, after the generating module 30 obtains the depth value of the target pixel, the depth value is used as a basic depth value, and the flying pixel depth threshold can be obtained according to a product of the basic depth value and a preset depth standard error. Among them, the preset depth standard error identifies a normal deviation range of the depth value between pixels caused by loop errors, temperature errors, and other reasons when acquiring the depth map. The flying pixel depth threshold determined based on the product of the normal deviation range and the basic depth value is more coincident with the depth value of the current depth map, which facilitates determination efficiency of flying pixels. For example, if the depth standard error is 1% and the basic depth value of a target non-flying pixel is *d_{base},* it is possible to use *d_{fly} = d_{base}* *1% as the flying pixel depth threshold.

The third acquiring module 40 is configured to determine a reference direction according to the gradient angle of the candidate flying pixel, and acquire depth values of a pair of adjacent pixels relative to the candidate flying pixel in the reference direction.

Specifically, as analyzed above, a depth change direction of the candidate flying pixel can be determined based on the gradient angle of the candidate flying pixel. Differences between depth values of pixels in the depth change direction and of the candidate flying pixel are obviously used as a standard for determining whether the candidate flying pixel is a flying pixel, and directions other than the gradient angle can be ignored. Thus, efficiency of determining flying pixels is improved. Specifically, the third acquiring module 40 determines the reference direction according to the gradient angle of the candidate flying pixel, and acquires depth values of a pair of adjacent pixels relative to the candidate flying pixel in the reference direction.

The fourth acquiring module 50 is configured to acquire a depth difference value between depth values of the candidate flying pixel and of each adjacent pixel in the pair of adjacent pixels.

The determining module 60 is configured to determine whether the candidate flying pixel is a flying pixel according to the depth difference values and the flying pixel depth threshold, so as to facilitate performing filtering process for the flying pixel.

Specifically, as analyzed above, flying pixels are greatly affected by pulse signals in the foreground area and the background area, which result in that regarding the depth value between the foreground and the background, the deviation of the depth value is large, and thus it necessarily has a large deviation from depth values of surrounding pixels. In this embodiment, the determining module 60 acquires a depth difference value between depth values of the candidate flying pixel and of each adjacent pixel in the pair of adjacent pixels, so as to determine a flying pixel according to difference of between depth values of the candidate flying pixel and of the adjacent pixels in the reference direction. If change relative to the depth values of the adjacent pixels in the reference direction is greater than the flying pixel depth threshold, the determining module 60 considers the candidate flying pixel as a flying pixel. Thus, the flying pixel is filtered to obtain a depth map in which flying pixels are filtered off, and experience of gesture recognition, three-dimensional modeling, somatosensory games and other applications based on the depth map is improved.

In an embodiment of the present application, as shown in FIG. 7, on the basis as shown in FIG. 6, the third acquiring module 40 comprises a first judging unit 41 and a first determining unit 42, wherein the first judging unit 41 is determined whether the gradient angle of the candidate flying pixel belongs to a preset range, and the first preset range is used to determine whether the candidate flying pixel has a depth change in a horizontal or vertical direction. For example, the preset range can be a range other than [-35°,-55°] or [35°,55°]. If it is within this range, referring to FIG. 5, it is obvious that the depth change direction does not include a diagonal direction. Therefore, the reference direction determined by the first determining unit 42 is an up-down direction or a left-right direction of the candidate flying pixel; if it does not belong to the preset range, the first determining unit 42 determines that the reference direction includes any opposite directions being adjacent to two sides of the candidate flying pixel.

In this embodiment, the first determining unit 42 is further configured to: if it does not belong to the preset range, determine that the reference direction includes any opposite directions being adjacent to two sides of the candidate flying pixel.

In an embodiment of the present application, as shown in FIG. 8, on the basis as shown in FIG. 6, the determining module 60 comprises a second judging unit 61 and a second determining unit 62. In this embodiment, the second judging unit 61 is configured to determine whether each of all of the depth values is greater than the flying pixel depth threshold; and if each of all of the depth values is greater than the flying pixel depth threshold, the second determining unit 62 determines that the candidate flying pixel is a flying pixel.

It should be noted that the foregoing illustration for the embodiments of the depth map processing method is also applicable to the depth map processing apparatus of this embodiment, and will not be repeated here.

In conclusion, in the depth map processing apparatus of the embodiment of the present application, based on current situations of depth values of pixels, a flying pixel depth threshold is determined self-adaptively; thus, based on the flying pixel depth threshold, determination of a flying pixel is performed; moreover, when performing determination of the flying pixel, a basis for whether it is a flying pixel is provided from more directions at the same time in combination with a confidence level gradient angle, accuracy of determination for the flying pixel is improved, and filtering quality of a depth map is improved.

In order to implement the above embodiments, the present application further provides an electronic apparatus comprising a memory, a processor, and a computer program stored in the memory and being executable by the processor; the processor, when executing the computer program, implements the depth map processing method as described in the aforementioned embodiments.

In order to implement the above embodiments, the present application further provides a non-transitory computer-readable storage medium which stores a computer program, and the computer program, when being executed by a processor, implements the depth map processing method as described in the aforementioned method embodiments.

In the description of this specification, descriptions with reference to the terms "one embodiment", "some embodiments", "examples", "specific example", "some examples" or the like represent that specific features, structures, materials, or characteristics described in combination with these embodiments or examples are included in at least one embodiment or example of the present application. In this specification, schematic representations of the above terms do not necessarily refer to the same embodiment or example. Moreover, the described specific features, structures, materials or characteristics can be combined in suitable manners in any one or more embodiments or examples. In addition, those skilled in the art can combine and constitute different embodiments or examples, and features of these different embodiments or examples, described in this specification without contradicting each other.

In addition, the terms "first" and "second" are only used for descriptive purposes, and cannot be understood as indicating or implying relative importance or implicitly indicating the number of indicated technical features. Therefore, the features defined with "first" or "second" may explicitly or implicitly include at least one such feature. In the description of the present application, "a plurality of" means at least two, such as two, three, etc., unless specifically defined otherwise.

Any process or method description described in a flowchart or in other ways herein can be understood as representing a module, segment or part that includes codes of one or more executable instructions for implementing custom logic functions or steps of a process; and the scope of preferred embodiments of the present application includes additional implementations, which may perform functions not according to the shown or discussed order, including in a substantially simultaneous manner or in the reverse order according to the functions involved. This should be understood by those skilled in the art to which the embodiments of the present application belong.

Logic and/or steps represented in a flowchart or described in other ways herein, for example, a sequenced list of executable instructions that can be considered as being used to implement logic functions, can be embodied in any computer-readable medium to be used by instruction execution systems, devices, or equipment (such as computer-based systems, systems including processors, or other systems that can fetch instructions from instruction execution systems, devices, or equipment and execute the instructions) or in combination with these instruction execution systems, devices, or equipment. With respect to this specification, a "computer-readable medium" can be any device that can contain, store, communicate, propagate, or transmit a program to be used by instruction execution systems, devices, or equipment or in combination with these instruction execution systems, devices, or equipment. More specific examples (a non-exhaustive list) of computer-readable media include the following: electrical connections with one or more wiring (electronic devices), portable computer disk cases (magnetic devices), random access memory (RAM), Read-only memory (ROM), erasable and editable read-only memory (EPROM or flash memory), fiber optic devices, and portable compact disk read-only memory (CDROM). In addition, the computer-readable medium may even be paper or other suitable medium on which the program can be printed, because it is possible to obtain the program electronically by, for example, optically scanning the paper or other medium, and then editing, interpreting, or processing in other suitable manners if necessary, and then store it in a computer memory.

It should be understood that each part of the present application can be implemented by hardware, software, firmware, or a combination thereof. In the above embodiments, multiple steps or methods can be implemented by software or firmware stored in a memory and executed by a suitable instruction execution system. For example, if they are implemented by hardware as in another embodiment, they can be implemented by any one of or a combination of the following technologies known in the art: discrete logic circuits with logic gate circuits for implementing logic functions for data signals, specific integrated circuits with suitable combinational logic gate circuits, programmable gate arrays (PGA), field programmable gate arrays (FPGA), etc.

One of ordinary skill in the art can understand that all or some of the steps brought in any method of the foregoing embodiments can be implemented by using a program to instruct relevant hardware. The program can be stored in a computer-readable storage medium. When the program is executed, it includes one of the steps of the method embodiment or a combination thereof.

In addition, each functional unit in each embodiment of the present application may be integrated into one processing module, or each unit may exist alone physically, or two or more units may be integrated into one module. The aforesaid integrated module can be implemented in the form of hardware, and can also be implemented in the form of software functional modules. If the integrated module is implemented in the form of a software function module and sold or used as an independent product, it can also be stored in a computer readable storage medium.

The aforementioned storage medium may be a read-only memory, a magnetic disk, an optical disk, etc. Although the embodiments of the present application have been shown and described above, it can be understood that the above embodiments are exemplary and should not be construed as limiting the present application. One of ordinary skill in the art can perform changes, modifications, substitutions, and transformations for the foregoing embodiments within the scope of the present application.

## Claims

1. A computer-implemented method for processing a depth map, comprising:
acquiring (101) a depth map to be processed, wherein each pixel in the depth map has a corresponding depth value and a confidence level of the depth value;
acquiring (102) a confidence level gradient and a gradient angle of each pixel in the depth map according to the confidence level of the depth value;
determining (103) a candidate flying pixel and a target pixel according to the confidence level gradients, and generating a flying pixel depth threshold according to a depth value of the target pixel, wherein the target pixel is a pixel point being distanced from the candidate flying pixel within a preset range;
determining (104) a reference direction according to the gradient angle of the candidate flying pixel, and acquiring depth values of a pair of adjacent pixels relative to the candidate flying pixel in the reference direction, wherein the candidate flying pixel is located between the pair of adjacent pixels; and
acquiring (105) a depth difference value between depth values of the candidate flying pixel and of each adjacent pixel in the pair of adjacent pixels, and determining whether the candidate flying pixel is a real flying pixel according to the depth difference values and the flying pixel depth threshold;
wherein the step of determining (103) a candidate flying pixel and a target pixel according to the confidence level gradients comprises:
determining a pixel of which the confidence level gradient is greater than a preset threshold as the candidate flying pixel;
determining all pixels located in a preset range distanced from the candidate flying pixel as candidate reference pixels, and acquiring a confidence level of a depth value of each candidate reference pixel in all of the candidate reference pixels; and
determining a candidate reference pixel of which the confidence level of a depth value is greater than a preset threshold as a target pixel.

2. The method according to claim 1, wherein the determining (104) a reference direction according to the gradient angle of the candidate flying pixel comprises:
determining whether the gradient angle of the candidate flying pixel belongs to a preset range;
if it belongs to the preset range, determining that the reference direction is an up-down direction or a left-right direction of the candidate flying pixel;
if it does not belong to the preset range, determining that the reference direction includes any opposite directions being adjacent to two sides of the candidate flying pixel.

3. The method according to claim 1 or 2, wherein the generating a flying pixel depth threshold according to a depth value of the target pixel comprises:
acquiring a base depth value of the target pixel; and
acquiring a flying pixel depth threshold according to a product of the base depth value and a preset depth standard error.

4. The method according to any one of claims 1-3, wherein the determining whether the candidate flying pixel is a real flying pixel according to the depth difference values and the flying pixel depth threshold comprises:
determining whether each of all of the depth difference values is greater than the flying pixel depth threshold;
if each of all of the depth difference values is greater than the flying pixel depth threshold, determining that the candidate flying pixel is a real flying pixel.

5. The method according to any one of claims 1-3, wherein the determining whether the candidate flying pixel is a real flying pixel according to the depth difference values and the flying pixel depth threshold comprises:
calculating a difference between depths of the candidate flying pixel and each pixel in pixels in various directions;
counting the number of depth differences being greater than the flying pixel depth threshold; and
determining that the candidate flying pixel is a real flying pixel in response to the number being greater than a preset depth difference number threshold.

6. The method according to claim 5, wherein the preset depth difference number threshold is determined by:
obtaining depth values and confidence levels of further neighboring pixels outside of neighboring pixels around the candidate flying pixel;
based on differences between depth values and between confidence levels of each neighboring pixel around the candidate flying pixel and its further neighboring pixels, screening neighboring pixels around the candidate flying pixel with selected confidence levels; and
determining the preset depth difference number threshold based on the number of screened neighboring pixels.

7. The method according to any one of claims 1-6, further comprising:
after determining that the candidate flying pixel is a real flying pixel, compensating a depth value of the real flying pixel to be a depth value of which a difference from a depth value of an adjacent pixel point is smaller than the flying pixel depth threshold.

8. A depth map processing apparatus comprising:
a first acquiring module (10) configured to acquire a depth map to be processed, wherein each pixel in the depth map has a corresponding depth value and a confidence level of the depth value;
a second acquiring module (20) configured to acquire a confidence level gradient and a gradient angle of each pixel in the depth map according to the confidence level of the depth value;
a generating module (30) configured to determine a candidate flying pixel and a target pixel according to the confidence level gradients, and generate a flying pixel depth threshold according to a depth value of the target pixel, wherein the target pixel is a pixel point being distanced from the candidate flying pixel within a preset range;
a third acquiring module (40) configured to determine a reference direction according to the gradient angle of the candidate flying pixel, and acquire depth values of a pair of adjacent pixels relative to the candidate flying pixel in the reference direction, wherein the candidate flying pixel is located between the pair of adjacent pixels;
a fourth acquiring module (50) configured to acquire a depth difference value between depth values of the candidate flying pixel and of each adjacent pixel in the pair of adjacent pixels; and
a determining module (60) configured to determine whether the candidate flying pixel is a real flying pixel according to the depth difference values and the flying pixel depth threshold;
wherein the step of determining a candidate flying pixel and a target pixel according to the confidence level gradients comprises:
determining a pixel of which the confidence level gradient is greater than a preset threshold as a candidate flying pixel;
determining all candidate reference pixels located in a preset range of candidate flying pixels, and acquiring a confidence level of a depth value of each candidate pixel in all of the candidate reference pixels; and
determining a candidate pixel of which the confidence level of a depth value is greater than a preset threshold as a target pixel.

9. The apparatus according to claim 8, wherein the third acquiring module (40) comprises:
a first judging module (41) configured to determine whether the gradient angle of the candidate flying pixel belongs to a preset range; and
a first determining unit (42) configured to: if it belongs to the preset range, determine that the reference direction is an up-down direction or a left-right direction of the candidate flying pixel;
wherein the first determining unit (42) is further configured to: if it does not belong to the preset range, determine that the reference direction includes any opposite directions being adjacent to two sides of the candidate flying pixel.

10. The apparatus according to claim 8 or 9, wherein the generating module (30) is further configured to:
acquire a base depth value of the target pixel; and
acquire a flying pixel depth threshold according to a product of the base depth value and a preset depth standard error.

11. The apparatus according to any one of claims 8-10, wherein the determining module (60) comprises:
a second judging unit (61) configured to determine whether each of all of the depth difference values is greater than the flying pixel depth threshold; and
a second determining unit (62) configured to: if each of all of the depth difference values is greater than the flying pixel depth threshold, determine that the candidate flying pixel is a real flying pixel.

12. A computer-readable storage medium storing a computer program, wherein the computer program, when being executed by a processor, implements a depth map processing method according to any one of claims 1-7.

## Patentansprüche

1. Tiefenkartenverarbeitungsverfahren, das Folgendes umfasst:
Erfassen (101) einer zu verarbeitenden Tiefenkarte, wobei jedes Pixel in der Tiefenkarte einen entsprechenden Tiefenwert und ein Vertrauensniveau des Tiefenwerts besitzt;
Erfassen (102) eines Vertrauensniveaugradienten und eines Gradientenwinkels jedes Pixels in der Tiefenkarte gemäß dem Vertrauensniveau des Tiefenwerts;
Bestimmen (103) eines fliegenden Kandidatenpixels und eines Zielpixels gemäß den Vertrauensniveaugradienten und Erzeugen eines Tiefenschwellenwerts fliegender Pixel gemäß einem Tiefenwert des Zielpixels, wobei das Zielpixel ein Pixelpunkt ist, der von dem fliegenden Kandidatenpixel innerhalb eines voreingestellten Bereichs beabstandet ist;
Bestimmen (104) einer Referenzrichtung gemäß dem Gradientenwinkel des fliegenden Kandidatenpixels und Erfassen von Tiefenwerten eines Paars benachbarter Pixel in Bezug auf das fliegende Kandidatenpixel in der Referenzrichtung, wobei sich das fliegende Kandidatenpixel zwischen dem Paar benachbarter Pixel befindet; und
Erfassen (105) eines Tiefendifferenzwerts zwischen Tiefenwerten des fliegenden Kandidatenpixels und jedem benachbarten Pixel in dem Paar benachbarter Pixel und Bestimmen, ob das fliegende Kandidatenpixel ein reales fliegendes Pixel ist, anhand der Tiefendifferenzwerte und des Tiefenschwellenwerts fliegender Pixel;
wobei der Schritt des Bestimmens (103) eines fliegenden Kandidatenpixels und eines Zielpixels gemäß den Vertrauensniveaugradienten Folgendes umfasst:
Bestimmen eines Pixels, dessen Vertrauensniveaugradient größer als ein voreingestellter Schwellenwert ist, als das fliegende Kandidatenpixel;
Bestimmen aller Pixel, die sich in einem voreingestellten Bereich beabstandet von dem fliegenden Kandidatenpixel befinden, als Kandidatenreferenzpixel und Erfassen eines Vertrauensniveaus eines Tiefenwerts jedes Kandidatenreferenzpixels in allen Kandidatenreferenzpixeln; und
Bestimmen eines Kandidatenreferenzpixels, dessen Vertrauensniveau eines Tiefenwerts größer als ein voreingestellter Schwellenwert ist, als ein Zielpixel.

2. Verfahren nach Anspruch 1, wobei das Bestimmen (104) einer Referenzrichtung gemäß dem Gradientenwinkel des fliegenden Kandidatenpixels Folgendes umfasst:
Bestimmen, ob der Gradientenwinkel des fliegenden Kandidatenpixels zu einem voreingestellten Bereich gehört;
dann, wenn er zu dem voreingestellten Bereich gehört, Bestimmen, dass die Referenzrichtung eine Auf-Ab-Richtung oder eine Links-Rechts-Richtung des fliegenden Kandidatenpixels ist;
dann, wenn er nicht zu dem voreingestellten Bereich gehört, Bestimmen, dass die Referenzrichtung alle entgegengesetzten Richtungen, die benachbart zu zwei Seiten des fliegenden Kandidatenpixels sind, enthält.

3. Verfahren nach Anspruch 1 oder 2, wobei das Erzeugen eines Tiefenschwellenwerts fliegender Pixel gemäß einem Tiefenwert des Zielpixels Folgendes umfasst:
Erfassen eines Basistiefenwerts des Zielpixels; und
Erfassen eines Tiefenschwellenwerts fliegender Pixel gemäß einem Produkt des Basistiefenwerts und eines voreingestellten Tiefenstandardfehlers.

4. Verfahren nach einem der Ansprüche 1-3, wobei das Bestimmen, ob das fliegende Kandidatenpixel ein reales fliegendes Pixel ist, gemäß den Tiefendifferenzwerten und dem Tiefenschwellenwert fliegender Pixel Folgendes umfasst:
Bestimmen, ob jeder von allen Tiefendifferenzwerten größer als der Tiefenschwellenwert fliegender Pixel ist;
dann, wenn jeder von allen Tiefendifferenzwerten größer als der Tiefenschwellenwert fliegender Pixel ist, Bestimmen, dass das fliegende Kandidatenpixel ein reales fliegendes Pixel ist.

5. Verfahren nach einem der Ansprüche 1-3, wobei das Bestimmen, ob das fliegende Kandidatenpixel ein reales fliegendes Pixel ist, gemäß den Tiefendifferenzwerten und dem Tiefenschwellenwert fliegender Pixel Folgendes umfasst:
Berechnen eines Unterschieds zwischen Tiefen des fliegenden Kandidatenpixels und jedem Pixel in Pixeln in verschiedenen Richtungen;
Zählen der Anzahl von Tiefendifferenzen, die größer als der Tiefenschwellenwert fliegender Pixel sind; und
Bestimmen, dass das fliegende Kandidatenpixel ein reales fliegendes Pixel ist, als Reaktion darauf, dass die Anzahl größer als ein voreingestellter Tiefendifferenzanzahlschwellenwert ist.

6. Verfahren nach Anspruch 5, wobei der voreingestellte Tiefendifferenzanzahlschwellenwert bestimmt wird durch:
Erhalten von Tiefenwerten und Vertrauensniveaus weiterer benachbarter Pixel außerhalb benachbarter Pixel um das fliegende Kandidatenpixel;
anhand von Differenzen zwischen Tiefenwerten und zwischen Vertrauensniveaus jedes benachbarten Pixels um das fliegende Kandidatenpixel und seine weiteren benachbarten Pixel Überprüfen benachbarter Pixel um das fliegende Kandidatenpixel mit ausgewählten Vertrauensniveaus; und
Bestimmen des voreingestellten Tiefendifferenzanzahlschwellenwerts anhand der Anzahl überprüfter benachbarter Pixel.

7. Verfahren nach einem der Ansprüche 1-6, das ferner Folgendes umfasst:
nach dem Bestimmen, dass das fliegende Kandidatenpixel ein reales fliegendes Pixel ist, Kompensieren eines Tiefenwerts des realen fliegenden Pixels so, dass er ein Tiefenwert ist, dessen Differenz von einem Tiefenwert eines benachbarten Pixelpunkts kleiner als der Tiefenschwellenwert fliegender Pixel ist.

8. Tiefenkartenverarbeitungsvorrichtung, die Folgendes umfasst:
ein erstes Erfassungsmodul (10), das konfiguriert ist, eine zu verarbeitende Tiefenkarte zu erfassen, wobei jedes Pixel in der Tiefenkarte einen entsprechenden Tiefenwert und ein Vertrauensniveau des Tiefenwerts besitzt;
ein zweites Erfassungsmodul (20), das konfiguriert ist, einen Vertrauensniveaugradienten und einen Gradientenwinkel jedes Pixels in der Tiefenkarte gemäß dem Vertrauensniveau des Tiefenwerts zu erfassen;
ein Erzeugungsmodul (30), das konfiguriert ist, ein fliegendes Kandidatenpixel und ein Zielpixel gemäß den Vertrauensniveaugradienten zu bestimmen und einen Tiefenschwellenwert fliegender Pixel gemäß einem Tiefenwert des Zielpixels zu erzeugen, wobei das Zielpixel ein Pixelpunkt ist, der von dem fliegenden Kandidatenpixel innerhalb eines voreingestellten Bereichs beabstandet ist;
ein drittes Erfassungsmodul (40), das konfiguriert ist, eine Referenzrichtung gemäß dem Gradientenwinkel des fliegenden Kandidatenpixels zu bestimmen und Tiefenwerte eines Paars benachbarter Pixel in Bezug auf das fliegende Kandidatenpixel in der Referenzrichtung zu erfassen, wobei sich das fliegende Kandidatenpixel zwischen dem Paar benachbarter Pixel befindet;
ein viertes Erfassungsmodul (50), das konfiguriert ist, einen Tiefendifferenzwert zwischen Tiefenwerten des fliegenden Kandidatenpixels und jedem benachbarten Pixel in dem Paar benachbarter Pixel zu erfassen; und
ein Bestimmungsmodul (60), das konfiguriert ist, zu bestimmen, ob das fliegende Kandidatenpixel ein reales fliegendes Pixel ist, gemäß den Tiefendifferenzwerten und dem Tiefenschwellenwert fliegender Pixel;
wobei der Schritt des Bestimmens eines fliegenden Kandidatenpixels und eines Zielpixels gemäß den Vertrauensniveaugradienten Folgendes umfasst:
Bestimmen eines Pixels, dessen Vertrauensniveaugradient größer als ein voreingestellter Schwellenwert ist, als ein fliegendes Kandidatenpixel;
Bestimmen aller Kandidatenreferenzpixel, die sich in einem voreingestellten Bereich von dem fliegenden Kandidatenpixel befinden, und Erfassen eines Vertrauensniveaus eines Tiefenwerts jedes Kandidatenpixels in allen Kandidatenreferenzpixeln; und
Bestimmen eines Kandidatenpixels, dessen Vertrauensniveau eines Tiefenwerts größer als ein aktueller Schwellenwert ist, als ein Zielpixel.

9. Vorrichtung nach Anspruch 8,
wobei das dritte Erfassungsmodul (40) Folgendes umfasst:
ein erstes Beurteilungsmodul (41), das konfiguriert ist, zu bestimmen, ob der Gradientenwinkel des fliegenden Kandidatenpixels zu einem voreingestellten Bereich gehört; und
eine erste Bestimmungseinheit (42), die konfiguriert ist, zu bestimmen, dass die Referenzrichtung eine Auf-Ab-Richtung oder eine Links-Rechts-Richtung des fliegenden Kandidatenpixels ist, wenn er zu dem voreingestellten Bereich gehört;
wobei die erste Bestimmungseinheit (42) ferner konfiguriert ist, zu bestimmen, dass die Referenzrichtung alle entgegengesetzten Richtungen, die benachbart zu zwei Seiten des fliegenden Kandidatenpixels sind, enthält, wenn er nicht zu dem voreingestellten Bereich gehört.

10. Vorrichtung nach Anspruch 8 oder 9,
wobei das Erzeugungsmodul (30) ferner konfiguriert ist zum:
Erfassen eines Basistiefenwerts des Zielpixels; und
Erfassen eines Tiefenschwellenwerts fliegender Pixel gemäß einem Produkt des Basistiefenwerts und einem voreingestellten Tiefenstandardfehler.

11. Vorrichtung nach einem der Ansprüche 8-10, wobei das Bestimmungsmodul (60) Folgendes umfasst:
eine zweite Beurteilungseinheit (61), die konfiguriert ist zu bestimmen, ob jeder von allen Tiefendifferenzwerten größer als der Tiefenschwellenwert fliegender Pixel ist; und
eine zweite Bestimmungseinheit (62), die konfiguriert ist zu bestimmen, dass das fliegende Kandidatenpixel ein reales fliegendes Pixel ist, wenn jeder von allen Tiefendifferenzwerten größer als der Tiefenschwellenwert fliegender Pixel ist.

12. Computerlesbares Speichermedium, das ein Computerprogramm speichert, wobei das Computerprogramm dann, wenn es durch einen Prozessor ausgeführt wird, ein Tiefenkartenverarbeitungsverfahren nach einem der Ansprüche 1-7 implementiert.

## Revendications

1. Procédé de traitement de carte de profondeur, comprenant :
l'acquisition (101) d'une carte de profondeur à traiter, chaque pixel dans la carte de profondeur possédant une valeur de profondeur correspondante et un niveau de confiance de la valeur de profondeur ;
l'acquisition (102) d'un gradient de niveau de confiance et d'un angle de gradient de chaque pixel dans la carte de profondeur selon le niveau de confiance de la valeur de profondeur ;
la détermination (103) d'un pixel volant candidat et d'un pixel cible selon les gradients de niveau de confiance, et la génération d'un seuil de profondeur de pixel volant selon une valeur de profondeur du pixel cible, le pixel cible étant un point pixel situé à distance du pixel volant candidat dans une plage prédéfinie ;
la détermination (104) d'une direction de référence selon l'angle de gradient du pixel volant candidat, et l'acquisition de valeurs de profondeur d'une paire de pixels adjacents par rapport au pixel volant candidat dans la direction de référence, le pixel volant candidat étant situé entre la paire de pixels adjacents ; et
l'acquisition (105) d'une valeur de différence de profondeur entre des valeurs de profondeur du pixel volant candidat et de chaque pixel adjacent dans la paire de pixels adjacents, et la détermination si le pixel volant candidat est ou non un pixel volant réel selon les valeurs de différence de profondeur et le seuil de profondeur de pixel volant ;
dans lequel l'étape de détermination (103) d'un pixel volant candidat et d'un pixel cible selon les gradients de niveau de confiance comprend :
la détermination, comme pixel volant candidat, d'un pixel dont le gradient de niveau de confiance est supérieur à un seuil prédéfini ;
la détermination, comme pixels de référence candidats, de tous les pixels situés dans une plage prédéfinie à distance du pixel volant candidat, et l'acquisition d'un niveau de confiance d'une valeur de profondeur de chaque pixel de référence candidat dans tous les pixels de référence candidats ; et
la détermination, comme pixel cible, d'un pixel de référence candidat dont le niveau de confiance d'une valeur de profondeur est supérieur à un seuil prédéfini.

2. Procédé selon la revendication 1, dans lequel la détermination (104) d'une direction de référence selon l'angle de gradient du pixel volant candidat comprend :
la détermination si l'angle de gradient du pixel volant candidat appartient ou non à une plage prédéfinie ;
s'il appartient à la plage prédéfinie, la détermination que la direction de référence est une direction haut-bas ou une direction gauche-droite du pixel volant candidat ;
s'il n'appartient pas à la plage prédéfinie, la détermination que la direction de référence comporte toute direction opposée adjacente à deux côtés du pixel volant candidat.

3. Procédé selon la revendication 1 ou 2, dans lequel la génération d'un seuil de profondeur de pixel volant comprend :
l'acquisition d'une valeur de profondeur de base du pixel cible ; et
l'acquisition d'un seuil de profondeur de pixel volant selon un produit de la valeur de profondeur de base et d'une erreur-type de profondeur prédéfinie.

4. Procédé selon l'une quelconque des revendications 1 à 3, dans lequel la détermination si le pixel volant candidat est ou non un pixel volant réel selon les valeurs de différence de profondeur et le seuil de profondeur de pixel volant comprend :
la détermination si chacune des toutes les valeurs de différence de profondeur est ou non supérieure au seuil de profondeur de pixel volant ;
si chacune de toutes les valeurs de différence de profondeur est supérieure au seuil de profondeur de pixel volant, la détermination que le pixel volant candidat est un pixel volant réel.

5. Procédé selon l'une quelconque des revendications 1 à 3, dans lequel la détermination si le pixel volant candidat est ou non un pixel volant réel selon les valeurs de différence de profondeur et le seuil de profondeur de pixel volant comprend :
le calcul d'une différence entre des profondeurs du pixel volant candidat et de chaque pixel dans des pixels dans diverses directions ;
la comptabilisation du nombre de différences de profondeur qui sont supérieures au seuil de profondeur de pixel volant ; et
la détermination que le pixel volant candidat est un pixel volant réel si le nombre est supérieur à un seuil de nombre de différences de profondeur prédéfini.

6. Procédé selon la revendication 5, dans lequel le seuil de nombre de différences de profondeur prédéfini est déterminé par :
l'obtention de valeurs de profondeur et de niveaux de confiance de pixels voisins supplémentaires en plus de pixels voisins autour du pixel volant candidat ;
sur la base de différences entre des valeurs de profondeur et entre des niveaux de confiance de chaque pixel voisin autour du pixel volant candidat et de ses pixels voisins supplémentaires, le filtrage de pixels voisins autour du pixel volant candidat avec des niveaux de confiance sélectionnés ; et
la détermination du seuil de nombre de différences de profondeur prédéfini sur la base du nombre de pixels voisins filtrés.

7. Procédé selon l'une quelconque des revendications 1 à 6, comprenant en outre :
après la détermination que le pixel volant candidat est un pixel volant réel, la compensation d'une valeur de profondeur du pixel volant réel pour donner une valeur de profondeur dont la différence par rapport à une valeur de profondeur d'un point pixel adjacent est inférieure au seuil de profondeur de pixel volant.

8. Appareil de traitement de carte de profondeur, comprenant :
un premier module d'acquisition (10) configuré pour acquérir une carte de profondeur à traiter, chaque pixel dans la carte de profondeur possédant une valeur de profondeur correspondante et un niveau de confiance de la valeur de profondeur ;
un deuxième module d'acquisition (20) configuré pour acquérir un gradient de niveau de confiance et un angle de gradient de chaque pixel dans la carte de profondeur selon le niveau de confiance de la valeur de profondeur ;
un module de génération (30) configuré pour déterminer un pixel volant candidat et un pixel cible selon les gradients de niveau de confiance, et générer un seuil de profondeur de pixel volant selon une valeur de profondeur du pixel cible, le pixel cible étant un point pixel situé à distance du pixel volant candidat dans une plage prédéfinie ;
un troisième module d'acquisition (40) configuré pour déterminer une direction de référence selon l'angle de gradient du pixel volant candidat, et acquérir des valeurs de profondeur d'une paire de pixels adjacents par rapport au pixel volant candidat dans la direction de référence, le pixel volant candidat étant situé entre la paire de pixels adjacents ;
un quatrième module d'acquisition (50) configuré pour acquérir une valeur de différence de profondeur entre des valeurs de profondeur du pixel volant candidat et de chaque pixel adjacent dans la paire de pixels adjacents ; et
un module de détermination (60) configuré pour déterminer si le pixel volant candidat est ou non un pixel volant réel selon les valeurs de différence de profondeur et le seuil de profondeur de pixel volant ;
dans lequel l'étape de détermination d'un pixel volant candidat et d'un pixel cible selon les gradients de niveau de confiance comprend :
la détermination, comme pixel volant candidat, d'un pixel dont le gradient de niveau de confiance est supérieur à un seuil prédéfini ;
la détermination de tous les pixels de référence candidats situés dans une plage prédéfinie de pixels volants candidats, et l'acquisition d'un niveau de confiance d'une valeur de profondeur de chaque pixel candidat dans tous les pixels de référence candidats ; et
la détermination, comme pixel cible, d'un pixel candidat dont le niveau de confiance d'une valeur de profondeur est supérieur à un seuil actuel.

9. Appareil selon la revendication 8, dans lequel le troisième module d'acquisition (40) comprend :
un premier module d'évaluation (41) configuré pour déterminer si l'angle de gradient du pixel volant candidat appartient ou non à une plage prédéfinie ; et
une première unité de détermination (42) configurée pour : s'il appartient à la plage prédéfinie, déterminer que la direction de référence est une direction haut-bas ou une direction gauche-droite du pixel volant candidat ;
dans lequel la première unité de détermination (42) est configurée en outre pour : s'il n'appartient pas à la plage prédéfinie, déterminer que la direction de référence comporte toute direction opposée adjacente à deux côtés du pixel volant candidat.

10. Appareil selon la revendication 8 ou 9, dans lequel le module de génération (30) est configuré en outre pour :
acquérir une valeur de profondeur de base du pixel cible ; et
acquérir un seuil de profondeur de pixel volant selon un produit de la valeur de profondeur de base et d'une erreur-type de profondeur prédéfinie.

11. Appareil selon l'une quelconque des revendications 8 à 10, dans lequel le module de détermination (60) comprend :
une deuxième unité d'évaluation (61) configurée pour déterminer si chacune des toutes les valeurs de différence de profondeur est ou non supérieure au seuil de profondeur de pixel volant ; et
une deuxième unité de détermination (62) configurée pour : si chacune de toutes les valeurs de différence de profondeur est supérieure au seuil de profondeur de pixel volant, déterminer que le pixel volant candidat est un pixel volant réel.

12. Support de stockage lisible par ordinateur stockant un programme d'ordinateur, le programme d'ordinateur, lorsqu'il est exécuté par un processeur, mettant en œuvre un procédé de traitement de carte de profondeur selon l'une quelconque des revendications 1 à 7.
